# EUROPEAN PATENT APPLICATION

(11) **EP 2 770 205 A1**
(43) Date of publication of application: **27.08.2014**
(21) Application number: 14155981.5
(22) Date of filing: 20.02.2014
(51) Int. Cl.: F04B 17/06, F04B 23/02, F04B 53/16, F04B 53/22

(54) **Pumping device with tank with facilitated release**

(30) Priority: 26.02.2013 IT PD20130045
(71) Applicant: Dab Pumps S.p.A., 35035 Mestrino (Padova) (IT)
(72) Inventor: Tazioli, Stefano, 57016 ROSIGNANO MARITTIMO, Località Gabbro LI (IT); Sinico, Francesco, 36075 MONTECCHIO MAGGIORE VI (IT)
(74) Representative: Modiano, Micaela Nadia

(57) **Abstract**

A pumping device (10) with tank (13) with facilitated release, which comprises an electric pump (11) and a delivery connector (12) of the electric pump (11) to which the tank (13) is connected by way of quick and reversible connection means (14) at a connecting portion (15) thereof.

## Description

The present invention relates to a pumping device with tank with facilitated release.

Pumping devices are currently known which are in units that are assembled or to be assembled on site during installation and the main components of which are an electric pump, which can be of the single-stage or multistage centrifugal type, i.e., provided with a plurality of impellers alternated with diffusers, an inverter that drives the electric pump and a tank that acts as a plenum chamber for the delivery.

In particular for the assembled unit, even more so if it is enclosed within a boxlike containment body, which obviously makes access to the components less straightforward, long and sometimes complicated operations for assembly and most of all disassembly of the components, such as the tank, with respect to the rest of the pumping device, are required.

The aim of the present invention is to propose a pumping device the tank of which can be separated easily from the rest of the proper device during maintenance.

Within this aim, an object of the invention is to propose a pumping device the tank of which can also be extracted easily from any boxlike body that contains it with the rest of the device.

Another object of the invention is to propose the means for separating easily the tank from the other components with which it is assembled.

A further object of the invention is to propose a pumping device that is capable of ensuring the safe association of the tank with the other components of the device and its retention within the boxlike body during use.

This aim, as well as these and other objects that will become better apparent hereinafter, are achieved by a pumping device with tank with facilitated release, characterized in that it comprises an electric pump and a delivery connector of the electric pump to which said tank is connected by quick and reversible connection means at a connecting portion thereof.

Further characteristics and advantages of the invention will become better apparent from the description of a preferred but not exclusive embodiment of the tank according to the invention, illustrated by way of nonlimiting example in the accompanying drawings, wherein:
Figure 1 is a perspective view of the pumping device according to the invention, in an open boxlike body with some components of the device in view, including the tank;
Figure 2 is a perspective view of the pumping device in the boxlike body and with a tool extracted from it;
Figure 3 is a view of the pumping device, similar to Figure 2, with the tool according to an orientation that is different with respect to the preceding one;
Figure 4 is a view of the pumping device according to the invention during the disassembly of the tank;
Figure 5 is a view of the pumping device according to the invention with the tank extracted from the boxlike body;
Figure 6 is an exploded perspective view of the connection of the tank to a distribution manifold of the delivery;
Figure 7 is a sectional view of the connection of the tank to the manifold according to the preceding figure;
Figure 8 is a perspective view of the tool;
Figure 9 is another perspective view of the tool;
Figure 10 is a sectional view of the tool;
Figure 11 is a sectional view of a portion of a pumping device with the tool in a first position for use;
Figure 12 is a view, taken along the same sectional plane as Figure 11, of the same portion of pumping device with the tool in a second position for use.

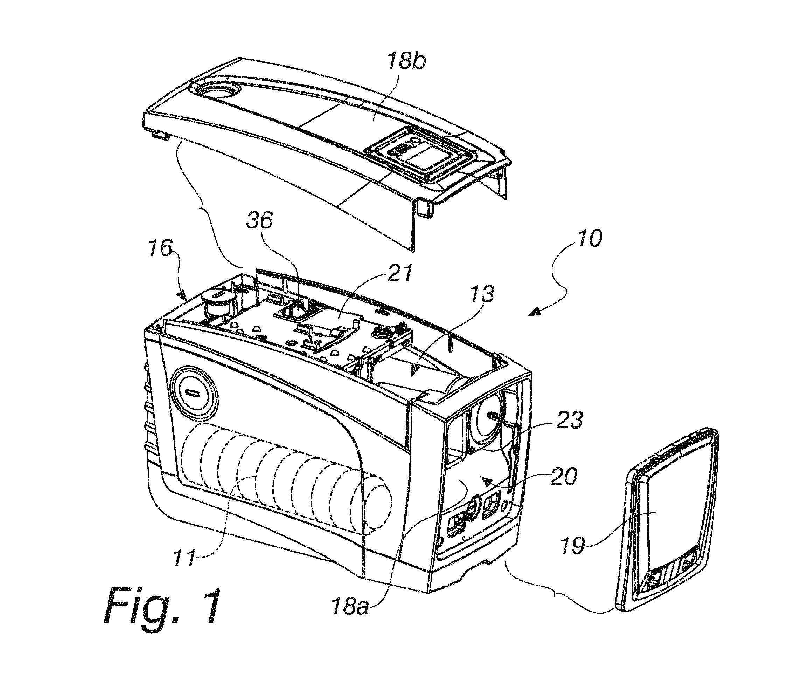

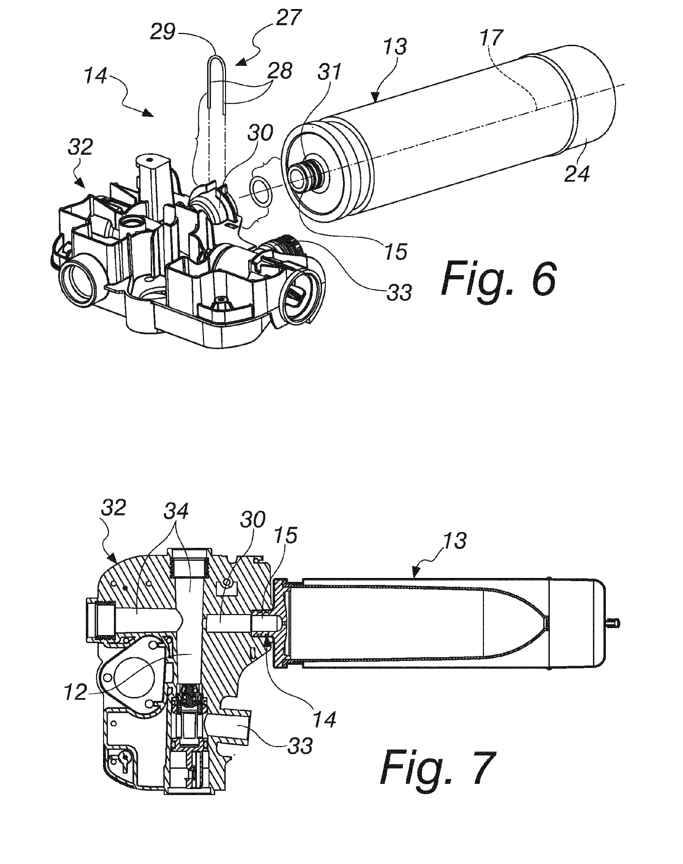

With reference to the figures, the pumping device according to the invention, generally designated by the reference numeral 10, comprises an electric pump 11, shown in broken lines in Figure 1 for the sake of simplicity, and a delivery connector 12 of the electric pump 11 to which a tank 13 with facilitated release is connected advantageously by way of quick and reversible connection means 14 (shown in Figures 6 and 7) at a connecting portion 15 thereof.

The tank 13 has a substantially cylindrical shape and, as is evident from the accompanying figures, the entire pumping device 10 is contained in a boxlike body 16, in which the tank 13 is arranged with an axis of symmetry 17 that is incident, at right angles, to the plane of arrangement of a first wall 18a of the boxlike body 16.

The boxlike body 16 substantially has the shape of a parallelepiped and is illustrated with all of its components in Figure 1, in which the opening of a door 19 that closes a technical compartment 20 at the first wall 18a, and the disassembly of a second wall 18b, that is upper with respect to the drawing that illustrates it, have allowed to indicate some of the internal components, such as the tank 13 proper and an electronic control and actuation unit 21 of the pumping device 10.

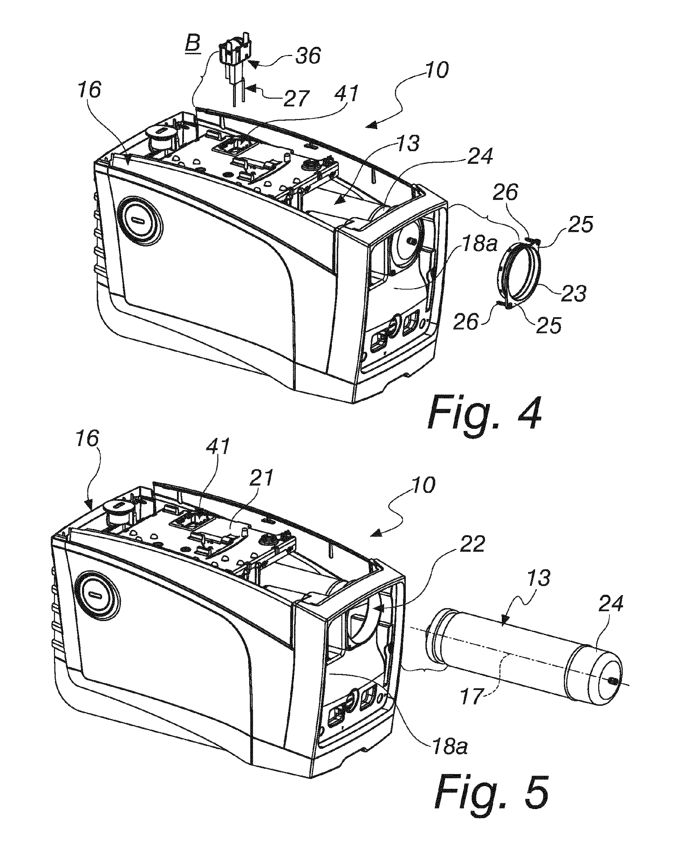

The tank 13 is connected advantageously at one end to the delivery connector 12 and at the opposite end protrudes through a window 22, shown in Figure 5, which is provided in the first wall 18a of the boxlike body 16 and from which it can be extracted.

The pumping device 10 is in fact provided conveniently also with an element 23 for retaining the tank 13 within the boxlike body 16. The retention element 23 has a shape that is substantially complementary to an end portion 24 of the tank 13, on the side of the first wall 18a, against which it rests and acts as a retainer, preventing its accidental extraction.

In particular, the end portion 24 has a smaller cross-section than the larger remaining part, which is substantially as wide as the window 22, in a cross-section that is parallel to the first wall 18a.

Both the quick and reversible connection means 14 and the retention element 23 are removable in order to extract the tank 13.

Figure 4 shows the retention element 23 (dissociated from the first wall 18a during the extraction of the tank 13), which is substantially annular in order to enter the boxlike body 16 through the window 22, surrounding part of the end portion 24, and has such a thickness as to exceed the difference in diameter between said part and the remaining part of the tank 13.

It is provided, furthermore, with two mutually opposite outward protrusions 25, each of which is crossed by a hole to be fixed conveniently by means of screws 26 to the first wall 18a.

The connection of the tank 13 to the delivery connector 12 is shown and is clearly understandable in Figure 6, in which it can be noticed that the quick and reversible connection means 14 comprise a U-shaped fork 27 that enters with two parallel arms 28, which protrude from a crossmember 29, in corresponding openings provided at the end of a branch 30 of the delivery connector 12 and in a groove 31 of the connecting portion 15 of said tank 13 that are inserted one inside the other.

In particular, in the illustrated case, the delivery connector 12 is part of a manifold 32, which is connected to the delivery of the pump by means of a connecting connector 33, and which, as clearly visible in the sectional view of the subsequent Figure 7, allows the distribution of the liquid from the delivery to the delivery connector 12, and in particular according to two extensions 34 to be opened and connected selectively to supply a hydraulic circuit, and optionally to the branch 30 that leads to the tank 13, which acts as a plenum chamber for the delivery.

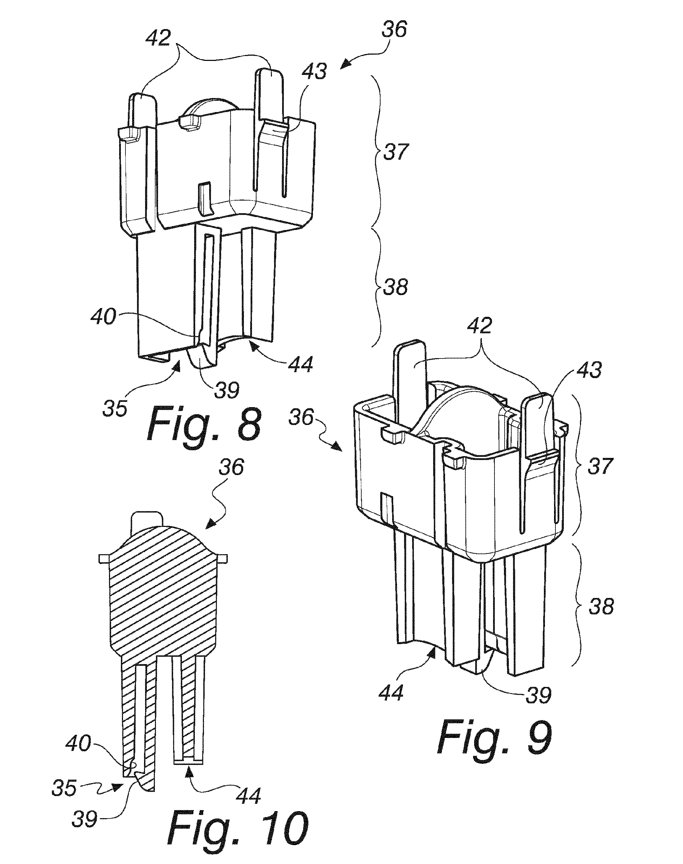

The quick and reversible connection means 14 are removable by way of adapted removal means 35 shown in detail in Figures 8, 9 and 10.

Said means substantially are part of a tool 36 that has a first grip portion 37 and a second portion 38, which in turn supports the removal means 35, having a substantially fork-like cross-section to accommodate the crossmember 29 of the U-shaped fork 27 during removal of the quick and reversible connection means 14, and means 44 for locking said U-shaped fork 27 in its position for keeping the branch 30 and the connecting portion 15 inserted in each other.

Figure 10 is indeed a sectional view of the tool 36, while the two preceding figures are two perspective views thereof.

The tool 36 is preferably made of plastic material in order to allow the elastic deformation of some of its portions.

Figure 8 shows that the removal means 35 support at the end of the second portion 38 a tooth 39 for gripping the crossmember 29 for the engagement and retention of the U-shaped fork 27, in the manner shown in Figure 4, and a bevel 40 for accommodating said crossmember 29 in the fork-like opening (of the removal means 35).

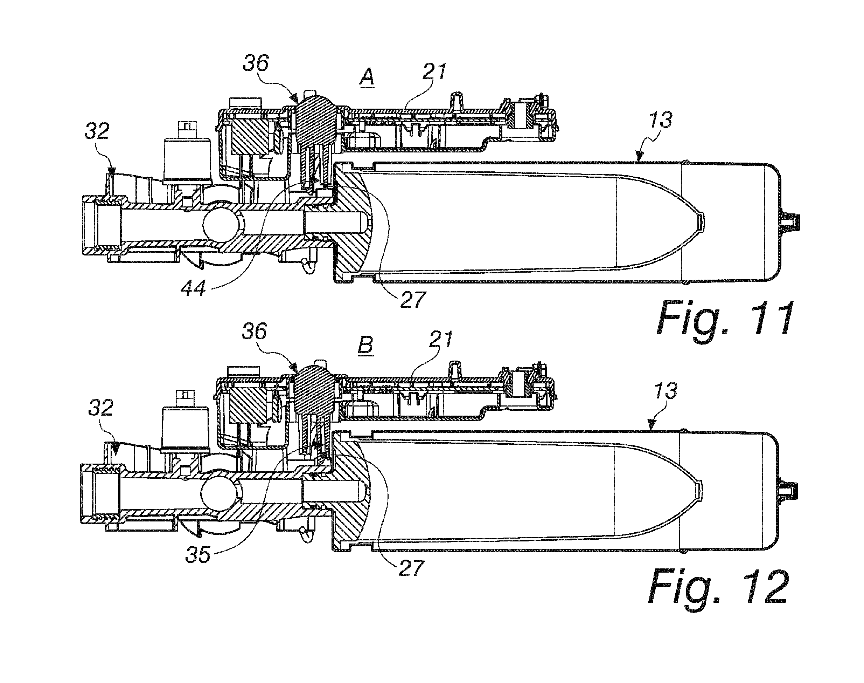

The subsequent Figures 11 and 12 are sectional views of a portion of the pumping device 10 with the tool 36 oriented according to two possible positions for use.

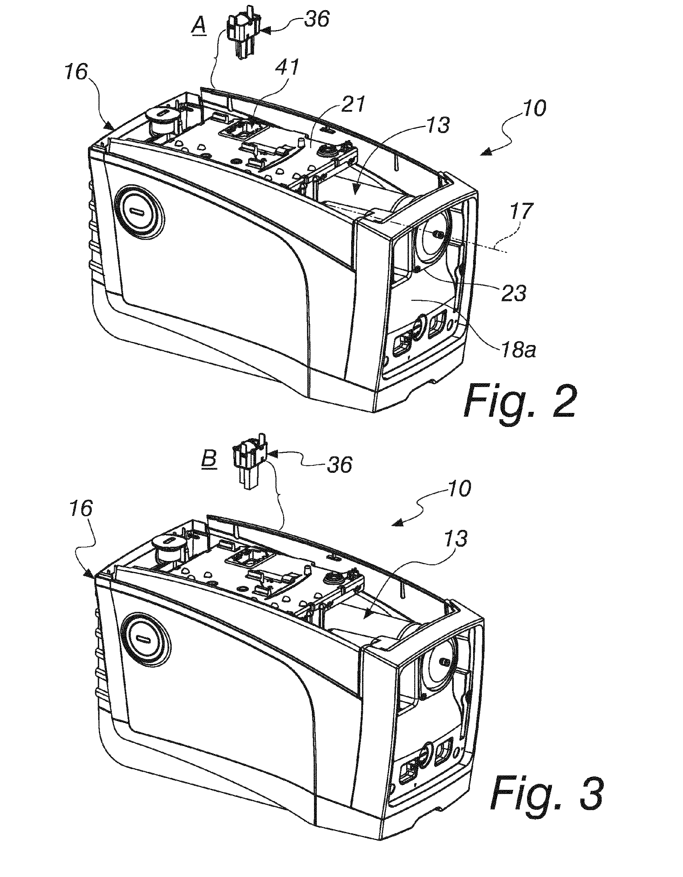

In particular, the tool 36 can be stored in a first position for use A, i.e., according to the orientation shown in Figure 2 and in the sectional view of Figure 11, in an adapted seat 41 that is defined by an opening that goes through to the tank 13. In particular, the seat 41 is provided on the electronic control and actuation unit 21, which is assembled with the rest of the pumping device 10 in an upward region, with respect to the drawings that show it, relative to the tank 13 and the electric pump 11.

The seat 41 is arranged exactly above the connecting portion 15 of the tank 13 and in particular above the U-shaped fork 27 that keeps the connecting portion 15 associated with the branch 30 of the manifold 32.

In particular, it can be seen from the sectional view of Figure 11 that the tool 36, inserted in the seat 41 according to its first position for use A, keeps the U-shaped fork 27 locked, preventing its extraction, by way of the adapted locking means 44 that press against the crossmember 29.

The U-shaped fork 27 is applied in the same position shown in Figure 6, therefore with a substantially horizontal crossmember 29, with respect to the illustrated figures, and the tool 36 is extractable from the seat 41 and can be inserted back therein for the release of the quick and reversible connection means 14, in a second position for use B that is rotated about its extraction direction with respect to the first position for use A, i.e., according to the orientation shown in Figure 3 and in the sectional view of Figure 12, for the engagement of the crossmember 29 by way of the adapted removal means 35. Furthermore, Figure 12 again illustrates the manner in which the tool 36 engages the U-shaped fork 27.

Figures 8 and 9 show the tool 36 from two opposite sides and a comparison of the two allows to notice that the first grip portion 37 is identical on the two sides. Two flexible tabs 42 on each side that is contiguous to the two preceding ones are instead substantially symmetrical on the two sides, and each one is provided with an anchoring protrusion 43 for engagement with the walls of the seat 41.

A portion of the seat 41 is shaped complementarily to the first portion 37, with the tool 36 in the first position for use A, so that when said tool is inserted in the seat 41 as shown in Figure 1, the two anchoring protrusions 43 engage in adapted recesses (not visible) of the walls in order to lock the tool 36.

When instead the tool 36 is inserted in the second position for use B, the anchoring protrusions 43 do not find the recesses and therefore do not produce the locking of the tool 36 inside the seat 41.

The use of the pumping device according to the invention, particularly in the disassembly of the tank, is as follows.

First of all, in order to disassemble the tank 13 with respect to the rest of the pumping device 10 and be able to extract it from the boxlike body 16 it is necessary to disassemble the second wall 18b of the boxlike body 16 and open the door 19 to access the technical compartment 20.

The tool 36 is thus accessible for its extraction: by gripping it by the two tabs 42 and flexing them toward each other, the disengagement of the anchoring protrusions 43 is produced.

It is thus possible to extract the tool 36 from the seat 41, as shown in Figure 2, according to the orientation that determines the first position for use A. In this manner, the U-shaped fork 27 is no longer retained by the locking means 44 and can be extracted.

The subsequent Figure 3 shows how the tool 36, rotated about the same extraction direction, can be inserted in the second position for use B again in the seat 41.

In this case, differently from the preceding case, on the basis of what has been described, it is not locked within the seat 41, and since said seat is defined by a through opening at the quick and reversible connection means 14, the removal means 35 reach the U-shaped fork 27.

Said fork is inserted easily, with the crossmember 29, in the fork of the removal means 35 by way of the bevel 40 and is retained by the grip tooth 39 until extraction from the pumping device 10 ends.

In this manner, disengagement between the manifold 32 and the tank 13 is produced.

The retention element 23 is then disassembled from the first wall 18a of the boxlike body 16 by unscrewing the screws 26. By moving the retention element 23 away, the tank 13 no longer has a retention element that retains it within the boxlike body 16 and can be extracted easily from it through the window 22, since moreover it is no longer engaged with the manifold 32 by means of its connecting portion 15.

The two operations that consist substantially in extracting the U-shaped fork 27 and in removing the retention element 23 can be performed equally in the described order or in the opposite order.

In practice it has been found that the invention achieves the intended aim and objects, providing a pumping device provided with a tank that is easy to disengage from the rest of the device proper and equally easy to extract from the boxlike body that contains it.

The invention further proposes both the means for retaining the tank inside the boxlike body and connected to the other components during use of said pumping device and the means for dissociating it easily and quickly from the other components.

Another advantage of the pumping device resides in that said means are proposed as part of the device proper, being thus always available when necessary.

The invention thus conceived is susceptible of numerous modifications and variations, all of which are within the scope of the appended claims; all the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. PD2013A000045 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A pumping device (10) with tank (13) with facilitated release, **characterized in that** it comprises an electric pump (11) and a delivery connector (12) of the electric pump (11) to which said tank (13) is connected by quick and reversible connection means (14) at a connecting portion (15) thereof.

2. The pumping device according to claim 1, **characterized in that** it is contained in a boxlike body (16), in which said tank (13), which has a substantially cylindrical shape, is arranged with an axis of symmetry (17) that is incident to the plane of arrangement of a first wall (18a) of said boxlike body (16), connected at one end to said delivery connector (12) and facing, at the opposite end, a window (22) provided in said first wall (18a) of said boxlike body (16) and from which it can be extracted.

3. The pumping device according to claim 2, **characterized in that** it is provided with an element (23) for retaining said tank (13) within said boxlike body (16), said retention element (23) having a shape that is substantially complementary to an end portion (24) of said tank (13), on the side of said first wall (18a), against which it rests and acts as abutment.

4. The pumping device according to claim 1, **characterized in that** said quick and reversible connection means (14) comprise a U-shaped fork (27) that is inserted with two parallel arms (28), which extend from a crossmember (29), in corresponding openings provided at the end of a branch (30) of said delivery connector (12) and in a groove (31) of said connecting portion (15) of said tank (13), which are inserted in each other.

5. The pumping device according to claim 4, **characterized in that** it is provided with adapted means (35) for removing said quick and reversible connection means (14).

6. The pumping device according to claim 5, **characterized in that** said removal means (35) are part of a tool (36) that has a first grip portion (37) and a second portion (38), provided with the removal means (35), which has a substantially fork-shaped cross-section to accommodate said crossmember (29) of the U-shaped fork (27) during the removal of said quick and reversible connection means (14), said removal means (35) having at least one grip tooth (39) for said crossmember (29) for the engagement and retention of said U-shaped fork (27).

7. The pumping device according to claim 6, **characterized in that** said tool (36) is stored in a first position for use (A) in a seat (41) obtained from an opening that goes through to the tank (13) so as to correspond to said crossmember (29) of said U-shaped fork (27) in order to retain the U-shaped fork (27) by way of locking means (44), said tool (36) being insertable in said seat (41) also in a second position for use (B), which is rotated with respect to said first position for use (A), for the engagement of said crossmember (29) by way of said removal means (35).
